(19) Europäisches Patentamt
European Patent Office
Office européen des brevets

(11) **EP 1 496 237 B1**

(12) **FASCICULE DE BREVET EUROPEEN**

(45) Date de publication et mention
de la délivrance du brevet:
**09.12.2009   Bulletin 2009/50**

(51) Int Cl.:
***F02D 41/40*** *(2006.01)*   ***F02D 35/02*** *(2006.01)*

(21) Numéro de dépôt: **04291699.9**

(22) Date de dépôt: **05.07.2004**

(54) **Système de contrôle du bruit de combustion d'un moteur Diesel de véhicule automobile**

Vorrichtung zur Verminderung des Geräusches einer selbstgezündeten Brennkraftmaschine

System to control combustion noise of a diesel engine

(84) Etats contractants désignés:
**AT BE BG CH CY CZ DE DK EE ES FI FR GB GR HU IE IT LI LU MC NL PL PT RO SE SI SK TR**

(30) Priorité:  **08.07.2003   FR 0308351**

(43) Date de publication de la demande:
**12.01.2005   Bulletin 2005/02**

(73) Titulaires:
• **Peugeot Citroën Automobiles S.A.**
**78140 Vélizy Villacoublay (FR)**
• **Delphi Technologies, Inc.**
**Troy, MI 48098 (US)**

(72) Inventeurs:
• **Vermonet, Claire**
**75116 Paris (FR)**
• **Meissonnier, Guillaume**
**41190 Landes le Gaulois (FR)**
• **Lorret, Cédric**
**75011 Paris (FR)**
• **Beauge, Yvon**
**94150 Rungis (FR)**

(74) Mandataire: **Fréchède, Michel et al**
**Cabinet Lavoix**
**2 place d'Estienne d'Orves**
**75441 Paris Cedex 09 (FR)**

(56) Documents cités:
**EP-A- 1 128 050     EP-A- 1 219 805**
**EP-A- 1 316 704     EP-A- 1 316 709**

## Description

La présente invention concerne un système de contrôle du bruit de combustion d'un moteur Diesel de véhicule automobile.

Plus particulièrement, ce système concerne l'optimisation de consigne d'injection pour un moteur Diesel comportant des moyens d'alimentation en carburant , par exemple à rampe commune, du moteur sous forme d'injections multiples de carburant dans chaque cylindre de celui-ci pour minimiser le bruit de combustion.

Les défauts actuels de ce type de systèmes d'injection pour moteur Diesel sont d'une part une dispersion des caractéristiques du moteur en sortie d'usine, due par exemple aux tolérances de fabrication et aux pressions extrêmement élevées du système, et d'autre part une dérive dans le temps, au cours de l'utilisation du véhicule, de la caractéristique en débit des injecteurs. De plus, les caractéristiques du moteur lui-même évoluent au cours de sa vie, comme par exemple le taux de compression dans les cylindres, la perméabilité des soupapes ou des segments, ce qui modifie les conditions thermodynamiques de la combustion. La somme de ces dérives se traduit par une dégradation du bruit de combustion du moteur directement ressentie par l'utilisateur du véhicule.

On connaît déjà dans l'état de la technique, plusieurs systèmes visant à recaler le système d'injection au cours de la vie du moteur de façon à assurer que les quantités injectées correspondent à la valeur de consigne. Par exemple le brevet EP 0 959 237 B1 présente une méthode de recalage du temps mort à l'injection utilisant un accéléromètre. D'autres méthodes sont connues pour recaler les débits pilotes en se basant sur le capteur de régime du moteur.

On connaît également des systèmes visant à modifier les quantités de carburant injectées dans les cylindres tenant compte de ces dérives pour corriger régulièrement la dégradation du bruit de combustion. Ces systèmes d'injection sont adaptés pour injecter du carburant dans les cylindres du moteur sous la forme d'au moins une injection pilote et une injection principale.

L'injection pilote sert à injecter une petite quantité de carburant quelques millisecondes avant l'injection principale de carburant, pour minimiser le bruit de combustion. En effet cette petite quantité de carburant conditionne favorablement les caractéristiques de l'inflammation de la quantité de carburant injectée lors de l'injection principale par une diminution des gradients de pression responsables du bruit de combustion.

On connaît des systèmes de contrôle du fonctionnement d'un moteur Diesel mettant en oeuvre une commande de cette injection pilote par exemple EP 1316704 A ou EP 1316709 A. Ces systèmes proposent de modifier les quantités de carburant injectées lors de l'injection pilote pour minimiser le bruit de combustion en se basant sur le calcul d'une note de bruit de combustion connu sous le nom de « Système IEPC », pour « Index d'Energie de Pression de Combustion ». Toutefois de tels systèmes présentent plusieurs inconvénients car le calcul de la note de bruit utilise un modèle du moteur et de l'oreille humaine.

Ceci suppose donc d'approximer le comportement réel du moteur par un modèle mathématique introduisant des erreurs. Pour réduire l'amplitude de telles erreurs, il est alors nécessaire d'augmenter la complexité du modèle ce qui a pour conséquences, non seulement une augmentation du temps de calcul, mais également une augmentation de la complexité du système lui-même, notamment en termes de taille de mémoire et de capacité de calcul du calculateur embarqué.

De plus, de par la nature même du problème, le modèle de moteur utilisé peut devenir obsolète puisque les caractéristiques du moteur changent au cours du temps, impliquant que le modèle n'est plus représentatif au bout d'un certain temps, à moins de mettre régulièrement à jours ses paramètres, ce qui suppose là encore une augmentation du degré de complexité.

Ensuite, l'utilisation d'un modèle de l'oreille humaine implique le désavantage supplémentaire de supposer un modèle unique de comportement auditif pour tous les utilisateurs.

Cette approche nécessite un temps de calcul très important car elle nécessite un filtrage numérique complexe. De plus les valeurs obtenues sont très dispersées, ce qui impose de moyenner sur un nombre important de cycles avant d'obtenir une valeur utilisable pour le contrôle de l'injection.

Pour augmenter la fiabilité de la minimisation du bruit de combustion, une solution consiste alors à utiliser une autre note du bruit de combustion.

A cet effet, la demande de brevet européen EP-A-1 209 458 concerne un procédé de détermination du bruit de combustion par l'utilisation de la méthode des ondelettes. Ce procédé s'affranchit certes de l'utilisation du modèle de l'oreille humaine et n'utilise pas directement lors du calcul de la note de bruit le modèle du moteur. Toutefois, cette méthode reste difficilement applicable de façon simple. En effet cette approche reste une approche basée sur un modèle mathématique de moteur, ne serait ce que pour le choix de la base des fonctions, et est par conséquent sujette aux mêmes inconvénients liés à l'utilisation d'un modèle. Enfin, cette approche reste coûteuse en temps de calcul car elle nécessite plusieurs filtrages numériques successifs pour obtenir les informations utiles pour le contrôle de l'injection. De plus, la dispersion coup à coup des valeurs est encore plus importante que pour la méthode « IEPC ».

Le but de la présente invention est de résoudre les problèmes susmentionnés en proposant notamment une approche non basée sur un modèle, efficace pour minimiser le bruit de combustion, applicable simplement et très peu coûteuse en terme de complexité et de temps de calcul.

A cet effet, l'invention a pour objet un système de contrôle du bruit de combustion d'un moteur Diesel de véhicule automobile, du type comportant des moyens d'alimentation en carburant du moteur par injections multiples de carburant dans chaque cylindre de celui-ci, adaptés pour déclencher une alimentation en carburant de chaque cylindre selon au moins une injection pilote et une injection principale de carburant, caractérisé en ce qu'il comprend :

- des moyens de détermination des gradients de pression dans le cylindre du moteur lors de son fonctionnement au moins lors des phases à injection pilote et principale ;
- des moyens de détermination de la quantité de carburant injectée dans le cylindre lors de l'injection pilote adaptés pour une quantité prédéterminée de carburant lors de l'injection principale afin d'optimiser un critère de fonctionnement du cylindre basé sur le rapport entre les gradients de pression correspondants aux phases à injection pilote et principale, et donc d'optimiser le bruit de fonctionnement du moteur.

Selon une autre caractéristique, le système est caractérisé en ce que les moyens de détermination de la quantité de carburant injectée dans le cylindre lors de l'injection pilote sont adaptés pour déterminer, par la mise en oeuvre d'un algorithme d'optimisation, une quantité de carburant injectée par cylindre lors de l'injection pilote selon les relations :

$$\min_{q_{pil} \in Q_{pil}} \left| \frac{\max\left( \frac{\partial P}{\partial \alpha_{pil}} \right)}{\max\left( \frac{\partial P}{\partial \alpha_{pri}} \right)} - k \right|$$

$$f\left( \max\left( \frac{\partial P}{\partial \alpha_{pil}} \right), \max\left( \frac{\partial P}{\partial \alpha_{pri}} \right) \right) < 0$$

où $q_{pil}$ est la quantité de carburant injectée dans un cylindre lors de l'injection pilote, $Q_{pil}$ est un ensemble prédéterminé de valeurs admissibles de $q_{pil}$, a est l'angle vilebrequin du cylindre, $\frac{\partial P}{\partial \alpha_{pil}}$ est le gradient de pression dans le cylindre lors de la phase à injection pilote du cycle du cylindre, $\frac{\partial P}{\partial \alpha_{pri}}$ est le gradient de pression dans le cylindre lors de la phase à injection principale du cycle du cylindre, k est une valeur de consigne pour le ratio $\frac{\max\left( \frac{\partial P}{\partial \alpha_{pil}} \right)}{\max\left( \frac{\partial P}{\partial \alpha_{pri}} \right)}$

et $f\left( \max\left( \frac{\partial P}{\partial \alpha_{pil}} \right), \max\left( \frac{\partial P}{\partial \alpha_{pri}} \right) \right) < 0$ est une fonction caractéristique d'une zone prédéterminée d'allocation de valeurs admissibles pour le couple de valeurs $\left( \max\left( \frac{\partial P}{\partial \alpha_{pil}} \right), \max\left( \frac{\partial P}{\partial \alpha_{pri}} \right) \right)$.

Selon une autre caractéristique, le système est caractérisé en ce que les moyens de détermination de la quantité de carburant injectée dans le cylindre lors de l'injection pilote sont adaptés pour mettre en oeuvre un algorithme d'optimisation qui comprend:

- une étape d'acquisition d'au moins un signal de gradient de pression représentatif de l'évolution du gradient de pression lors d'un cycle du cylindre.

- une étape de calcul d'une valeur R représentative du ratio $\dfrac{\max\left(\dfrac{\partial P}{\partial \alpha}_{pil}\right)}{\max\left(\dfrac{\partial P}{\partial \alpha}_{pri}\right)}$ pour le cylindre et la quantité constante de carburant injectée considérés en fonction du au moins un signal de gradient de pression acquis ; et
- une étape de détermination d'une variation de la quantité de carburant injectée dans le cylindre lors de la phase pilote en fonction de la valeur $\overline{R}$ calculée, selon une loi de parcours prédéterminée de l'ensemble prédéterminé de valeurs admissibles de quantité de carburant injectée lors de l'injection pilote.

Selon une autre caractéristique, le système est caractérisé en ce que la loi de parcours de l'ensemble prédéterminé de valeurs admissibles de quantité de carburant injectée lors de l'injection pilote, est déterminée par les caractéristiques d'un modèle thermodynamique selon la relation :

$$\max\left(\frac{\partial P}{\partial \alpha}_{pri}\right) = h\left(\max\left(\frac{\partial P}{\partial \alpha}_{pil}\right)\right)$$

où h est le modèle thermodynamique représentatif de l'évolution de la valeur du maximum du gradient de pression dans un cylindre lors de la phase à injection principale en fonction des valeurs du maximum du gradient de pression dans un cylindre lors de la phase à injection pilote.
Selon une autre caractéristique, le système est caractérisé en ce qu'il comprend un capteur de pression associé à chaque cylindre raccordé aux moyens de détermination des gradients de pression.
Selon une autre caractéristique, le système est caractérisé en ce qu'il comprend des moyens d'acquisition de l'angle de l'arbre moteur raccordé aux moyens de détermination des gradients de pression.
Selon une autre caractéristique, le système est caractérisé en ce les moyens de détermination des gradients de pression comprennent :

- des moyens de sélection de signal pour sélectionner un signal de pression d'un cylindre sélectionné parmi la pluralité des signaux de pression des cylindres;
- des moyens de fenêtrage d'acquisition pour acquérir le signal de pression du cylindre sélectionné délivré par le capteur de pression associé lorsque l'angle vilebrequin du cylindre est compris dans une plage d'angle vilebrequin d'acquisition prédéterminée représentative de la phase à injection pilote et de la phase à injection principale du cycle du cylindre;
- un convertisseur analogique-numérique pour échantillonner le signal de pression en sortie des moyens de fenêtrage selon une loi d'échantillonnage prédéterminée ; et
- un filtre numérique adapté pour déterminer une dérivée numérique du signal de pression échantillonné et ainsi obtenir le signal de gradient de pression de cylindre.

Selon une autre caractéristique, le système est caractérisé en ce que le filtre numérique de dérivation est un filtre numérique à réponse impulsionnelle finie.
Selon une autre caractéristique, le système est caractérisé en ce que les moyens de détermination comprennent des moyens de calcul adaptés pour calculer et stocker, à chaque cycle du cylindre, la valeur $\max\left(\dfrac{\partial P}{\partial \alpha}_{pil}\right)$ comme

étant la valeur du signal de gradient de pression maximale dans la plage d'angle vilebrequin entre le début de la plage d'angle vilebrequin d'acquisition et l'angle d'avance de l'injection principale, la valeur $\max\left(\dfrac{\partial P}{\partial \alpha}_{pri}\right)$ comme étant la valeur maximale du signal de gradient de pression dans la plage d'angle vilebrequin entre cet angle d'avance d'injection principale et la fin de la plage d'angle vilebrequin d'acquisition et la valeur du ratio $R = \dfrac{\max\left(\dfrac{\partial P}{\partial \alpha}_{pil}\right)}{\max\left(\dfrac{\partial P}{\partial \alpha}_{pri}\right)}$ .

Selon une autre caractéristique, le système est caractérisé en ce que la fonction caractéristique de la zone prédéterminée d'allocation est déterminée en fonction d'une note de bruit de fonctionnement du moteur dépendant des gradients de pression correspondant aux phases à injections pilote et principale selon la relation :

$$\mathrm{Note} = \alpha + \beta \times \max\left(\max\left(\frac{\partial P}{\partial \alpha}_{pil}\right), \max\left(\frac{\partial P}{\partial \alpha}_{pri}\right)\right)$$

où $\alpha$ et $\beta$ sont des paramètres déterminés expérimentalement.

Selon une autre caractéristique, le système est caractérisé en ce que les moyens de détermination de la quantité de carburant injectée dans le cylindre lors de l'injection pilote sont adaptés pour déterminer séquentiellement la quantité de carburant injectée dans chaque cylindre indépendamment les uns des autres.

Selon une autre caractéristique, le système est caractérisé en ce qu'il comprend des moyens de commande adaptés pour commander les moyens d'alimentation pour calculer la quantité de carburant injectée lors de l'injection pilote dans le cylindre de manière à réguler dans le cylindre la valeur du ratio $\dfrac{\max\left(\dfrac{\partial P}{\partial \alpha}_{pil}\right)}{\max\left(\dfrac{\partial P}{\partial \alpha}_{pri}\right)}$ autour d'une valeur de consigne k afin de minimiser le bruit de fonctionnement du moteur.

La présente invention sera mieux comprise à la lecture de la description qui va suivre, donnée uniquement à titre d'exemple et faite en se référant aux dessins annexés, où des références identiques identifient des éléments identiques, et dans lesquels :

- la figure 1A est une courbe représentative des valeurs du maximum du gradient de pression lors de la phase à injection principale en fonction des valeurs du maximum du gradient de pression lors de la phase à injection pilote, dans un cylindre du moteur ;
- la figure 1B est une courbe représentative d'un critère à minimiser dépendant du ratio des valeurs maximales de gradient de pression en fonction de la quantité pilote injectée ;
- la figure 2 est une vue schématique d'un mode de réalisation d'un système de contrôle du fonctionnement d'un moteur Diesel de véhicule automobile selon l'invention ;
- la figure 3 est une vue schématique de moyens de détermination des gradient de pression de la figure 2 et entrant dans la constitution d'un système selon l'invention ;
- la figure 4 est un organigramme de l'algorithme de recherche de la valeur de la quantité pilote optimale mis en oeuvre dans le système selon l'invention.

Comme il a déjà été indiqué précédemment, l'amplitude du bruit de combustion d'un moteur notamment Diesel de véhicule automobile dépend de l'amplitude du gradient de pression dans la chambre de combustion des cylindres lors de l'inflammation du carburant. L'amplitude du gradient de pression est quant à elle directement dépendantes des conditions initiales de l'inflammation. Ainsi dans le cas d'un moteur alimenté en carburant en injection selon au moins une injection pilote et une injection principale, l'injection pilote permet de préparer des conditions favorables à la combustion principale. Par conséquent, moins la chambre de combustion a été préparée par une injection pilote au début de l'inflammation de la quantité de carburant principale, plus l'augmentation de la pression est brusque lors de cette inflammation et par conséquent plus le bruit de combustion de la principale est prononcé.

C'est pourquoi, le bruit de combustion dépend à la fois du gradient de pression lors de la phase à injection pilote et du gradient de pression lors de la phase à injection principale. Pour minimiser le bruit de combustion, il convient alors de calculer des quantités pilote injectées dans les cylindres du moteur qui tiennent compte des caractéristiques du gradient de pression lors de ces deux phases.

Augmenter la quantité pilote de carburant diminue l'amplitude du gradient de pression lors de l'inflammation de la quantité de carburant principale. Si la quantité de carburant pilote injectée dans un cylindre est telle que le maximum du gradient de pression lors de la phase à injection pilote est sensiblement égal au maximum du gradient de pression lors de la phase à injection principale, le bruit de combustion dans ce cylindre est alors minimal.

Une note de bruit de combustion d'un cylindre peut en effet être exprimée par la relation :

$$\text{Note} = \lambda + \beta \times \max\left( \max\left( \frac{\partial P}{\partial \alpha_{\text{pil}}} \right), \max\left( \frac{\partial P}{\partial \alpha_{\text{pri}}} \right) \right) \qquad (1)$$

ou par la relation :

$$\text{Note}\_a = \alpha - \tilde{\beta} \times \left( \log \frac{\max\left( \frac{\partial P}{\partial \alpha_{\text{pil}}} \right)}{\max\left( \frac{\partial P}{\partial \alpha_{\text{pri}}} \right)} \right)^2 \qquad (1a)$$

où $\lambda$, $\beta$, a et $\tilde{\beta}$ sont des paramètres déterminés lors d'une campagne d'écoute avec un jury d'experts, $\dfrac{\partial P}{\partial \alpha_{\text{pil}}}$ est le gradient de pression dans le cylindre lors de la phase à injection pilote du cycle du cylindre, $\dfrac{\partial P}{\partial \alpha_{\text{pri}}}$ est le gradient de pression dans le cylindre lors de la phase à injection principale du cycle du cylindre, et $\alpha$ est l'angle vilebrequin du cylindre considéré.

La corrélation de ces notes de bruit de combustion avec une note de bruit délivrée par le jury d'experts est très élevée et cela quelque soit le point de fonctionnement du moteur considéré. Ainsi, comme on peut le constater en considérant la note de bruit selon la relation (1a) ci-dessus, pour minimiser le bruit de fonctionnement du moteur, ou de manière équivalente pour maximiser cette note de bruit de combustion selon la relation (1 a) ci-dessus, il faut et il suffit de faire tendre le ratio des gradients de pression apparaissant dans le terme logarithmique vers 1 et cela indépendamment du point de fonctionnement du moteur, du cylindre considéré et des valeurs des paramètres mécaniques et/ou thermodynamiques du moteur. De façon à assurer un niveau d'émission de polluants acceptable et une bonne robustesse, notamment par rapport à la dispersion coup à coup de l'injection pilote, il est particulièrement avantageux de faire tendre le ratio des gradients de pression vers une valeur *k* différente de 1 qui est caractéristique de la calibration du compromis bruit / émissions / robustesse.

Ainsi la présente invention se propose de calculer, pour au moins un point de fonctionnement du moteur et une quantité de carburant injectée lors de l'injection principale prédéterminée en fonction du point de fonctionnement, une quantité pilote à injecter qui soit la solution à un problème de minimisation selon l'équation

$$\min_{q_{pil} \in Q_{pil}} \left| \frac{\max\left(\dfrac{\partial P}{\partial \alpha}_{pri}\right)}{\max\left(\dfrac{\partial P}{\partial \alpha}_{pil}\right)} - k \right| \qquad (2)$$

où $q_{pil}$ est la quantité de carburant injectée dans le cylindre lors de l'injection pilote, $Q_{pil}$ est l'ensemble prédéterminé de valeurs admissibles de $q_{pil}$, et k une valeur calibrable proche de 1.

La quantité pilote, la note de bruit de combustion selon la relation (1), sont déterminées pour un cylindre particulier et pour un point de fonctionnement du moteur donné, c'est-à-dire un régime et une charge du moteur donnés. Pour couvrir la plage de fonctionnement du moteur, il est possible de déterminer une quantité pilote par cylindre pour plusieurs points de fonctionnement, comme cela est connu de l'état de la technique. Ainsi la résolution du problème d'optimisation est considéré pour un point de fonctionnement déterminé et un cylindre.

Les valeurs admissibles de la quantité pilote sont aisément caractérisables. En effet, au-delà d'une valeur de quantité pilote injectée $q_{pil}^{max}$, la consommation de carburant et l'émission de polluants deviennent trop importantes pour un gain sur le bruit de combustion négligeable voir nul si ce n'est une dégradation de celui-ci. De même, il est connu qu'en dessous d'une certaine valeur de quantité pilote injectée $q_{pil}^{min}$, il est certain que le bruit de combustion est fortement dégradé. Ainsi l'ensemble des valeurs admissibles pour la quantité pilote peut être simplement caractérisé par l'intervalle $\left[q_{pil}^{min} \quad q_{pil}^{max}\right]$. Bien entendu, rien n'empêche de rechercher la quantité pilote injectée dans l'intervalle $\left[0 \quad q_{pil}^{max}\right]$.

Outre le fait de calculer une quantité pilote minimisant le bruit de combustion par l'utilisation d'un critère ne faisant intervenir aucun modèle de l'oreille humaine, la présente invention n'utilise aucun modèle du moteur pour résoudre le problème d'optimisation précédent, ce qui a pour autre avantage qu'elle est applicable à un moteur quelconque indépendamment de la valeur de ses caractéristiques mécaniques et/ou thermodynamiques et donc applicable indépendamment des variations de ses caractéristiques.

Un autre avantage non négligeable du problème d'optimisation selon la relation (2) est que le critère que l'on cherche à minimiser, à savoir le critère $\left| \dfrac{\max\left(\dfrac{\partial P}{\partial \alpha}_{pri}\right)}{\max\left(\dfrac{\partial P}{\partial \alpha}_{pil}\right)} - k \right|$, est unimodale, c'est-à-dire qu'il ne présente qu'un seul minimum qui est par conséquent un minimum global. Ainsi la détermination de la quantité pilote optimale peut être obtenue de façon efficace et rapide et cela quelque soit la précision désirée sur sa valeur comme cela sera décrit plus en détail par la suite.

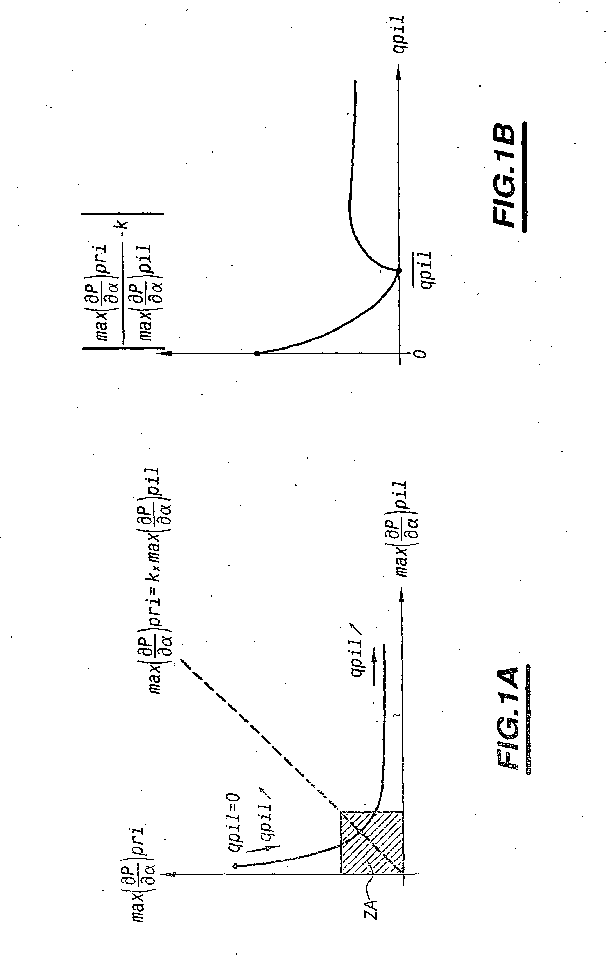

Il est possible de le comprendre en considérant l'évolution du maximum du gradient de pression dans un cylindre lors de la phase à injection principale en fonction de la valeur du maximum du gradient de pression lors de la phase à injection pilote comme cela est représenté par la courbe de la figure 1A représentative d'un modèle thermodynamique selon la relation :

$$\max\left(\frac{\partial P}{\partial \alpha}_{pri}\right) = h\left( \max\left(\frac{\partial P}{\partial \alpha}_{pil}\right)\right) \qquad (3)$$

où h est le modèle thermodynamique représentatif de l'évolution de la valeur du maximum du gradient de pression dans le cylindre lors de la phase à injection principale en fonction de la valeur du maximum du gradient de pression dans le cylindre lors de la phase à injection pilote.

L'allure de la courbe représentée est classique et cette courbe peut être paramétrée par la quantité pilote $q_{pil}$. En effet, l'injection d'une quantité croissante de quantité pilote correspond à un sens de parcours de la courbe selon les valeurs croissantes du maximum du gradient de pression lors de la phase à injection pilote.

A partir de ces caractéristiques, il est possible d'en déduire simplement la courbe caractéristique de la quan-

tité $\left| \dfrac{\max\left(\dfrac{\partial P}{\partial \alpha_{pri}}\right)}{\max\left(\dfrac{\partial P}{\partial \alpha_{pil}}\right)} - k \right|$ en fonction de $q_{pil}$, comme cela est représenté sur le figure 1B. Comme on peut le constater, cette courbe est représentative d'une fonction ne présentant qu'un unique minimum correspondant à la quantité optimale d'injection pilote. Il est possible d'obtenir simplement ce minimum et de façon certaine, par exemple par la mise en oeuvre d'un simple algorithme du gradient.

Il n'est pas nécessaire de connaître explicitement cette fonction ni le modèle thermodynamique h, la recherche de la quantité d'injection pilote optimale ne se basant que sur des considérations qualitatives. Par exemple, comme on peut le constater sur la courbe de la figure 1A, si la valeur du ratio est supérieure à k, on sait que la quantité pilote injectée est insuffisante. La recherche de la quantité pilote optimale s'oriente alors donc vers des quantités pilotes plus importantes. De même si la valeur du ratio est supérieure à k, on sait que la quantité pilote injectée est trop importante et la recherche s'oriente en conséquence vers des quantités pilotes plus faibles.

A la relation (2) il est possible d'ajouter une contrainte de faisabilité selon la relation :

$$f\left(\max\left(\frac{\partial P}{\partial \alpha_{pil}}\right), \max\left(\frac{\partial P}{\partial \alpha_{pri}}\right)\right) < 0 \qquad\qquad (4)$$

où $f\left(\max\left(\dfrac{\partial P}{\partial \alpha_{pil}}\right), \max\left(\dfrac{\partial P}{\partial \alpha_{pri}}\right)\right) < 0$ est une fonction caractéristique d'une zone prédéterminée d'allocation de valeurs admissibles pour le couple de valeurs $\left(\max\left(\dfrac{\partial P}{\partial \alpha_{pil}}\right), \max\left(\dfrac{\partial P}{\partial \alpha_{pri}}\right)\right)$.

En effet, il est souhaitable que les valeurs de ces maxima de gradient de pression soient dans une zone de valeurs pour assurer un bon fonctionnement du moteur. Par exemple, dans le cas où les gradients sont inférieurs à des valeurs calibrables de seuil bas de gradient, le moteur ne fonctionne pas correctement et il est nécessaire de le commander dans un mode dégradé.

Il est également possible d'imaginer un ratio égal à k, tout en ayant des valeurs maximales de gradient de pression lors des phases à injection pilote et principale supérieures à des valeurs de seuil haut de gradient très importantes, ce qui signifie également un dysfonctionnement du moteur.

Une manière de caractériser les bornes supérieures de la zone d'allocation, c'est-à-dire les valeurs de seuil haut de gradient, est d'utiliser la note de bruit de combustion selon la relation (1)

$$Note = \lambda + \beta \times \max\left(\max\left(\frac{\partial P}{\partial \alpha_{pil}}\right), \max\left(\frac{\partial P}{\partial \alpha_{pri}}\right)\right)$$

où $\lambda$ et $\beta$ sont des paramètres déterminés expérimentalement lors d'une campagne d'écoute avec un jury d'experts et de choisir par exemple une fonction caractéristique de la zone d'allocation selon la relation :

$$f\left(\max\left(\frac{\partial P}{\partial \alpha_{pil}}\right), \max\left(\frac{\partial P}{\partial \alpha_{pri}}\right)\right) = Note - \gamma \qquad (6)$$

où $\gamma$ est un paramètre de seuil de bruit de combustion déterminé lors d'une campagne d'écoute avec un jury d'experts.

A ces relations, il est également possible de rajouter des relations décrivant d'autres caractéristiques du moteur comme par exemple des relations de consommation de carburant, d'émission de polluants ou autres.

Il est à noter que l'exemple de note de bruit de combustion selon la relation (1) peut être utilisé dans des systèmes de contrôle de fonctionnement de moteur Diesel classiques qui sont basés sur l'utilisation de note de bruit de combustion.

Un exemple de zone d'allocation est donné par la zone hachurée ZA de la figure 1A. L'infaisabilité du problème d'optimisation selon les relations (2) et (4) permet donc de diagnostiquer un état dégradé du moteur et plus particulièrement un problème de dérive du moteur.

Grâce à la résolution du problème d'optimisation qui vient d'être décrite, il est possible de calculer simplement la quantité pilote pour un cylindre et pour un point de fonctionnement déterminé. Il est alors possible de concevoir un système de contrôle du fonctionnement du moteur Diesel ayant pour principal objet de minimiser le bruit de combustion des cylindres. En effet en sélectionnant un nombre de points de fonctionnement (Régime, Charge) du moteur et en déterminant régulièrement pour chaque cylindre et pour chacun de ces points une quantité pilote optimale, le bruit de fonctionnement est ainsi minimisé sur l'ensemble de la plage de fonctionnement.

Le choix des points de fonctionnement est réalisé de manière classique et connu en soi par échantillonnage de la plage de fonctionnement. Cet échantillonnage peut par exemple tenir compte des zone linéaires et/ou non linéaires du fonctionnement du moteur.

La simplicité et la rapidité de la détermination de la quantité pilote solution du problème d'optimisation permet d'envisager un recalage fréquent des quantités pilotes et ainsi d'obtenir une régulation du bruit de fonctionnement autour de sa valeur minimale sur l'ensemble de la plage de fonctionnement, comme cela est décrit par la suite.

Il est à noter qu'il est équivalent, pour un cylindre, de :

a) Réguler le bruit de combustion autour de sa valeur minimale ;

b) Réguler le ratio $\dfrac{\max\left(\dfrac{\partial P}{\partial \alpha_{pri}}\right)}{\max\left(\dfrac{\partial P}{\partial \alpha_{pil}}\right)}$ autour de k ; ou

c) Réguler la quantité pilote autour de sa valeur optimale.

Ainsi dans la suite de la présente description, il est fait mention de manière équivalente à l'une ou l'autre de ces assertions.

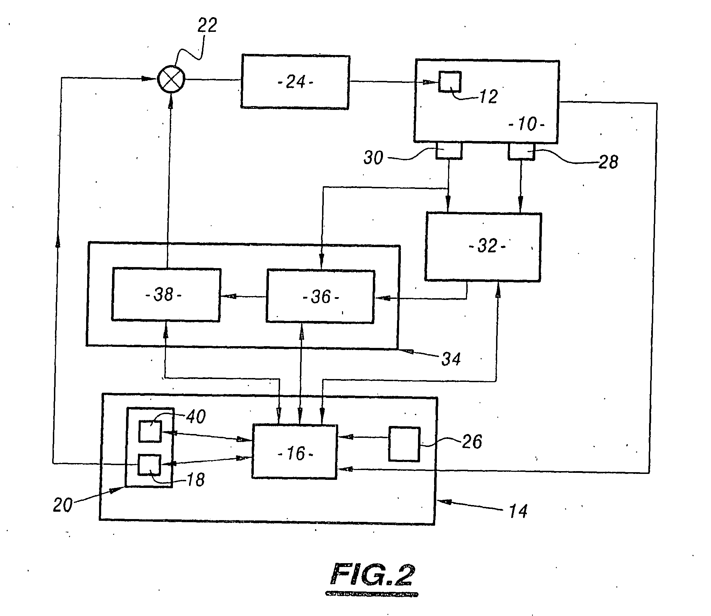

La figure 2 est une vue schématique d'un système de contrôle du fonctionnement d'un moteur Diesel de véhicule automobile selon l'invention basé sur les concepts précédemment décrits.

On a représenté sous la référence 10, un moteur Diesel, comportant des moyens 12 d'alimentation en carburant par injections multiples adaptés pour déclencher une injection de carburant dans chaque cylindre selon au moins une injection pilote et une injection principale de carburant. Par exemple il peut s'agir d'un moteur Diesel pourvu d'une rampe commune d'alimentation en carburant des cylindres par des injecteurs commandés.

Entre deux instants de recalage des quantités pilotes, la quantité pilote injectée par cylindre et par point de fonctionnement (Régime, charge) du moteur est fournie par une unité 14 de traitement d'informations. Celle-ci comprend une unité 16 de commande qui reçoit en entrée des informations sur le régime et la charge du moteur Diesel 10 de façon classique. Cette unité 16 de commande interroge des moyens formant cartographie 18 d'une unité de stockage 20 en fonction des informations de régime et de charge reçues, reçoit en réponse la consigne correspondante de quantité pilote pour chaque cylindre et l'envoie, via un additionneur 22, à des moyens 24 formant cartographie d'injecteur qui délivrent en réponse aux moyens 12 d'alimentation une information de consigne d'injection, relative notamment à la quantité d'injection pilote.

Pour des raisons de concision, il n'a pas été représenté les différents moyens commandant les quantités de carburant injectées lors de l'injection principale. Comme il est connu du domaine de la commande d'injection pour moteur Diesel, ces quantités sont elles aussi dépendantes du point de fonctionnement et sont déterminées en fonction de celui-ci.

Régulièrement le recalage des quantités pilotes est activé par une unité 26 de supervision de l'unité 14 de traitement d'informations. Cette unité 26 de supervision envoie une requête de recalage à l'unité 16 de commande qui lance alors la détermination de la quantité pilote optimale pour chaque cylindre et pour au moins un point de fonctionnement du moteur. La détermination de la quantité pilote des cylindres est alors menée de façon séquentielle, cylindre par cylindre indépendamment les uns des autres.

Chaque cylindre est associé à un capteur 28 de pression pour mesurer la pression dans la chambre de combustion du cylindre. Ce capteur de pression est classiquement connu et peut être incorporé dans la chambre de combustion ou être non intrusif.

Des moyens 30 de détection de l'angle de l'arbre moteur sont également prévus. Il peut s'agir par exemple d'un capteur magnétique à effet Hall pourvu d'une roue dentée associé à l'arbre moteur, comme cela est connu de l'état de la technique.

A partir des mesures d'angle délivrées par le capteur d'angle, il est possible d'en déduire simplement l'angle vilebrequin de chaque cylindre.

Les capteurs 28 de pression et le capteur 30 d'angle d'arbre moteur sont raccordés à des moyens 32 de détermination des gradients de pression dans les cylindres. Ces moyens 32 de détermination des gradients sont adaptés pour sélectionner un signal de pression en provenance des capteurs de pression en fonction d'un signal de sélection de cylindre envoyé par l'unité 16 de commande de l'unité 14 de traitement d'informations et pour acquérir une portion prédéfinie de ce signal de pression sélectionné lorsque l'angle vilebrequin du cylindre sélectionné est compris dans un intervalle d'angle $[\alpha_d\ \alpha_f]$. Cet intervalle est délivré par l'unité 16 de commande, et $\alpha_d$ est l'angle de début d'acquisition du signal de pression et $\alpha_f$ est l'angle de fin d'acquisition du signal de pression.

De façon typique une valeur de $\alpha_d$ égale à -30˚ et une valeur de $\alpha_f$ égale à 40˚ correspondent à un intervalle représentatif de la phase à injection pilote et de la phase à injection principale du cycle d'un cylindre. Il est en effet connu que la phase à injection pilote et la phase à injection principale ont lieu dans un intervalle d'angle vilebrequin sensiblement égal à [-30˚, +40˚].

Les moyens 32 de détermination des gradients de pression sont en outre adaptés pour échantillonner le signal de pression sélectionné et dériver numériquement le signal de pression échantillonné pour ainsi obtenir un signal de gradient de pression échantillonné du cylindre sélectionné. Bien entendu, le gradient de pression peut être acquis de façon analogique puis être échantillonné.

Ce signal de gradient de pression est alors fourni à une unité 34 de détermination de quantité pilote. Cette unité 34 de détermination de quantité pilote comprend une unité 36 de calcul qui reçoit en entrée le gradient de pression et l'angle vilebrequin mesuré pour déterminer le maximum du gradient de pression lors de la phase à injection pilote et le maximum de gradient lors de la phase à injection principale. Pour cela, cette unité 36 de calcul reçoit comme seconde entrée l'angle d'avance de l'injection principale $\alpha_a$ de l'unité 16 de commande et calcule la valeur du maximum du gradient de pression lors de la phase à injection pilote $\dfrac{\partial P}{\partial \alpha_{pil}}$ comme étant la valeur du maximum du gradient de pression lorsque l'angle vilebrequin est inférieur à $\alpha_a$ , c'est-à-dire quand cet angle est compris dans l'intervalle $[\alpha_d\ \alpha_a]$,

et le maximum du gradient de pression lors de la phase à injection principale $\dfrac{\partial P}{\partial \alpha_{pri}}$ comme étant la valeur maximum du gradient de pression lorsque l'angle vilebrequin est supérieur ou égal à $\alpha_a$ , c'est-à-dire lorsque cet angle est compris dans l'intervalle $]\alpha_a\ \alpha_f]$. Il est à noter que le choix des bornes n'est pas une caractéristique essentielle, les mêmes résultats pouvant être obtenus avec des bornes légèrement différentes.

Cette unité calcule également, sur la base des ces deux maxima calculés, le ratio $R = \dfrac{\max\left(\dfrac{\partial P}{\partial \alpha_{pri}}\right)}{\max\left(\dfrac{\partial P}{\partial \alpha_{pil}}\right)}$ .

Les valeurs des deux maxima de gradient de pression ainsi que la valeur du ratio sont alors fournies à l'unité 16 de commande pour être stockées dans des moyens de stockage 20 pour un traitement ultérieur.

L'unité 34 de détermination de quantité pilote comprend par ailleurs une unité 38 d'optimisation qui reçoit les valeurs des maxima de gradient de pression et de ratio, pour déterminer une valeur optimale de quantité pilote. Tant que cette valeur n'est pas encore déterminée, cette unité 38 d'optimisation détermine régulièrement une nouvelle valeur de quantité pilote qui est envoyée à l'additionneur 22 pour être additionnée à la valeur provenant des moyens 18 formant cartographie. Cette unité 34 de détermination nécessite certains paramètres de réglage fonction du point de fonctionnement (régime, charge) du moteur et éventuellement du cylindre sélectionné. Ces paramètres de réglage sont lus dans une table 40 de paramètres des moyens 20 de stockage par l'unité 16 de commande qui les envoie à l'unité 38 d'optimisation. Le fonctionnement et la recherche d'une quantité pilote optimale sera décrite plus en détail par la suite.

Une fois la valeur de la quantité pilote optimale déterminée, cette valeur est fournie à l'unité 16 de commande qui met à jour en conséquence les moyens 18 formant cartographie. Une analyse supplémentaire des résultats fournis par l'unité 38 de détermination peut être menée pour également mettre à jour les paramètres de la table 40 de paramètres.

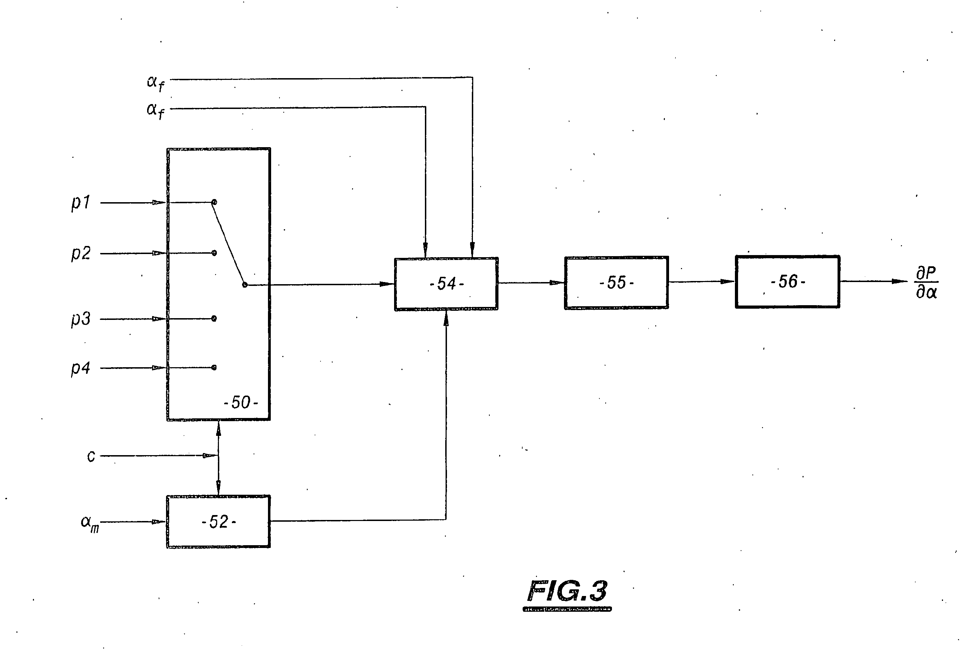

La figure 3 est un exemple de mode de réalisation des moyens de détermination des gradients de pression de la figure 2. En supposant que le moteur Diesel 10 comprend par exemple quatre cylindres, les moyens de détermination des gradients de pression reçoivent en entrée quatre signaux de pression p1, p2, p3, p4 en provenance des capteurs de pression associés aux cylindres du moteur. Ces signaux p1, p2, p3, p4 sont fournis à des moyens commandés 50 de sélection de signal adaptés pour sélectionner un signal de pression en fonction du signal c de sélection de cylindre, délivré comme cela a été décrit ci-dessus par l'unité 16 de commande. Ces moyens 50 de sélection peuvent par exemple comporter un commutateur commandable de type classique.

Par ailleurs, les moyens de détermination des gradients de pression reçoivent comme autre entrée, le signal d'angle d'arbre moteur $\alpha_m$ qui est fourni à un additionneur 52 commandable adapté pour déterminer l'angle vilebrequin du cylindre sélectionné par l'addition d'une valeur caractéristique du cylindre sélectionné, en recevant comme autre entrée le signal de sélection de cylindre c.

Les sorties des moyens 50 de sélection et de l'additionneurs 52 sont raccordées à une unité 54 de fenêtrage. Cette unité de fenêtrage reçoit également comme entrées de l'unité 16 de commande comme il a été expliqué précédemment les deux valeurs d'angle $\alpha_d$ et $\alpha_f$, respectivement l'angle de début d'acquisition et l'angle de fin d'acquisition et sélectionne la portion du signal de pression correspondant à l'angle vilebrequin compris dans l'intervalle [$\alpha_d$ $\alpha_a$].

Un convertisseur/analogique numérique 55 échantillonne ce signal selon une période d'échantillonnage d'angle vilebrequin prédéterminé sur la fenêtre déterminée par les moyens 50 de sélection, par exemple 0,5 degré, pour permettre un traitement numérique du signal. Il est à noter que l'échantillonnage n'est pas nécessairement constant. En effet, il est possible de déterminer une loi d'échantillonnage qui échantillonne finement le signal dans les intervalles où le signal présente de fortes variations et échantillonne le signal plus grossièrement dans les intervalles où le signal varie peu. De manière générale, un échantillonnage adaptatif peut être mis en oeuvre comme cela est connu du domaine du traitement du signal.

Le signal échantillonné est alors fourni à un filtre numérique de dérivation 56, de préférence un filtre à réponse impulsionnelle finie, qui calcule une dérivée numérique du signal échantillonné de pression.

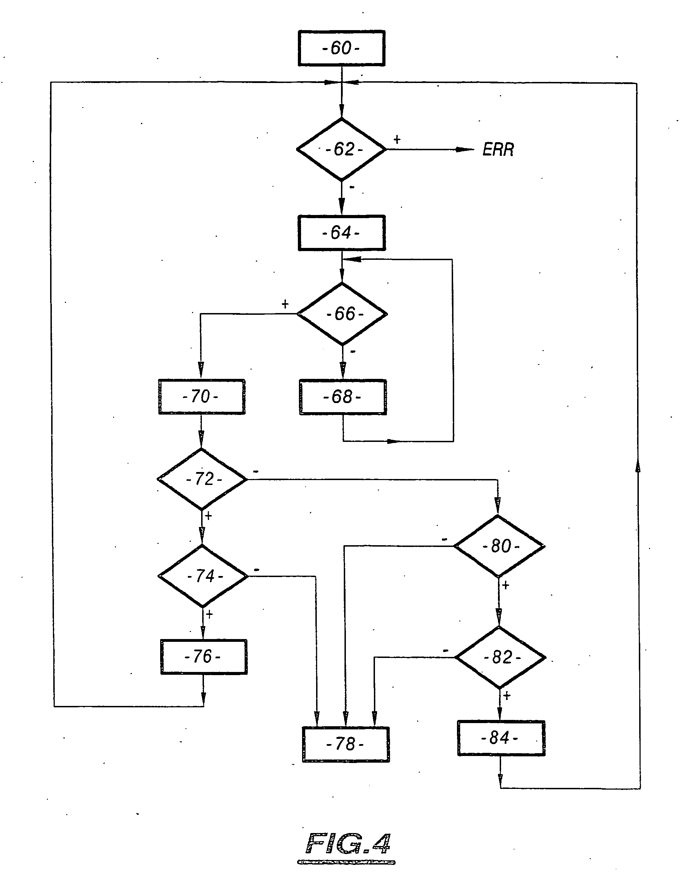

La figure 4 représente un organigramme de fonctionnement des moyens de détermination de quantité pilote de la figure 2 et la manière dont ces moyens de détermination calculent une consigne de quantité pilote optimale pour un cylindre, un point de fonctionnement particulier et une quantité de carburant injectée lors de la phase à injection principale prédéterminés, la valeur de la quantité pilote injectée dans les autres cylindres étant fixées à une valeur prédéterminée, celle mémorisée dans les moyens 18 formant cartographie.

Dans un bloc 60, la valeur de quantité pilote $q_{pil}$ injectée à l'entrée de l'additionneur 22 par l'unité 38 d'optimisation est ajustée à une valeur initiale pré-determinée. Si la détermination est absolue, c'est-à-dire si la valeur de quantité pilote envoyée depuis les moyens 18 formant cartographie à l'additionneur 22 est réglée sur 0 lors de la détermination de la quantité pilote, cette valeur initiale est comprise dans l'intervalle $\left[ q_{pil}^{min} \quad q_{pil}^{max} \right]$. Il peut s'agir par exemple de la valeur minimale $q_{pil}^{min}$ ou de la valeur de la consigne précédemment calculée pour ce cylindre. Si la détermination est relative, c'est-à-dire si la valeur envoyée à l'additionneur 22 depuis les moyens 18 formant cartographie, appelée $q_{pil}^{p}$ par exemple, est non nulle, la valeur initiale de $q_{pil}$ est réglée sur une valeur comprise dans l'intervalle $\left[ q_{pil}^{min} - q_{pil}^{p} \quad q_{pil}^{max} - q_{pil}^{p} \right]$ (étant bien entendu que $q_{pil}^{p}$ est effectivement comprise dans $\left[ q_{pil}^{min} \quad q_{pil}^{max} \right]$) qui est utilisé comme intervalle de recherche. Il sera détaillé par la suite une recherche de la quantité pilote optimale absolue pour des besoins de concision de la description, sans que cela ne soit en rien restrictif.

A un bloc 62, un test est mis en oeuvre pour savoir si la valeur de $q^{pil}$ est supérieure à $q_{pil}^{max}$ ou inférieure à $q_{pil}^{min}$. Si le résultat de ce test est positif, un message d'erreur est généré et un état de dysfonctionnement du moteur est diagnostiqué. Si ce résultat est négatif, dans un bloc 64, un compteur de cycle et deux drapeaux $q_{pil}^{+}$ et $q_{pil}^{-}$ sont initialisés à 1.

Dans un bloc 66, un test est mis en oeuvre pour savoir si la valeur du compteur de cycle, adapté pour compter les cycles du cylindre, est supérieure ou égale à une valeur de seuil N+1 prédéterminée. Si le résultat de ce test est négatif, dans un bloc 68, l'unité 36 de calcul calcule et stocke dans les moyens 20 de stockage, la valeur maximum du gradient de pression $\dfrac{\partial P}{\partial \alpha_{pil}}$ lors de la phase à injection pilote et la valeur maximum du gradient de pression $\dfrac{\partial P}{\partial \alpha_{pri}}$ lors de la phase à injection principale du cycle du cylindre courant ainsi que le ratio $R = \dfrac{\max\left(\dfrac{\partial P}{\partial \alpha_{pri}}\right)}{\max\left(\dfrac{\partial P}{\partial \alpha_{pil}}\right)}$ de ces deux valeurs.

Dans ce même bloc le compteur de cycle est incrémenté d'un pas d'incrément de un puis la sortie du bloc 68 est rebouclée à l'entrée du bloc 66.

Si le résultat du test sur la valeur du compteur de cycle est positif, un traitement numérique du signal est alors mis en oeuvre par l'unité 36 de calcul dans un bloc 70 sur les N dernières valeurs de $\dfrac{\partial P}{\partial \alpha_{pil}}$, de $\dfrac{\partial P}{\partial \alpha_{pri}}$ et de $R = \dfrac{\max\left(\dfrac{\partial P}{\partial \alpha_{pri}}\right)}{\max\left(\dfrac{\partial P}{\partial \alpha_{pil}}\right)}$ calculées.

Ce traitement numérique peut consister en un filtrage de bruit comme par exemple un calcul de moyenne. Il peut également s'agir de moyens d'estimation utilisant des modèles de bruit et/ou de moteur pour obtenir un filtrage plus efficace du bruit. Toutefois, le calcul de la moyenne après saturation permettant de limiter l'impact de ratios très faibles ou très élevés correspondant à des irrégularités dans le fonctionnement du moteur est préféré car il est robuste numériquement, très rapide et n'utilise pas de modèle. Ainsi il est obtenu, à la suite de ce calcul de moyenne, trois valeurs moyennes $\overline{P}_1$, $\overline{P}_2\overline{R}$ correspondant respectivement aux moyennes des N dernières valeurs de $\dfrac{\partial P}{\partial \alpha_{pil}}$, $\dfrac{\partial P}{\partial \alpha_{pri}}$ et de R.

Dans un bloc 72, un premier test sur la valeur $\overline{R}$ est mis en oeuvre pour savoir si la valeur moyenne $\overline{R}$ est supérieure ou égale à une valeur seuil de ratio haut R_haut prédéterminée. Si le résultat de ce test est positif, un test est mis en oeuvre dans un bloc 74 pour savoir si la valeur du drapeau $q_{pil}^{-}$ est égale à 0. Si le résultat de ce test sur la valeur de $q_{pil}^{-}$ est positif, dans un bloc 76, la quantité pilote $q_{pil}$ injectée dans le cylindre est augmentée d'un pas d'incrément de quantité pilote $\Delta q_{pil}$ positif prédéterminé, la valeur du drapeau $q_{pil}^{+}$ est réglée à 0 puis la sortie du bloc 76 est rebouclée à l'entrée du bloc 62.

Si le résultat de ce test sur la valeur de $q_{pil}^{-}$ est négatif, une interpolation est alors mise en oeuvre dans un bloc 78 qui sera expliquée ci-après.

Si le résultat du premier test sur la valeur $\bar{R}$ est négatif, un second test sur la valeur de $\bar{R}$ est mis en oeuvre dans un bloc 80 pour savoir si la valeur moyenne $\bar{R}$ est inférieure ou égale à une valeur de seuil bas R_bas prédéterminée. Si le résultat de ce test est positif, un test est mis en oeuvre dans un bloc 82 pour savoir si la valeur de $q_{pil}^{+}$ est égale à 0.

Si le résultat de ce test sur la valeur de $q_{pil}^{+}$ est positif, dans un bloc 84, la quantité pilote $q_{pil}$ injectée dans le cylindre est diminuée du pas d'incrément de quantité pilote $\Delta q_{pil}$ , la valeur du drapeau $q_{pil}^{-}$ est réglée à 0 puis la sortie du bloc 84 est rebouclée à l'entrée du bloc 62.

Si le résultat de ce test sur la valeur de $q_{pil}^{+}$ est négatif, l'interpolation du bloc 78 est alors mise en oeuvre. Si le résultat du second test mis en oeuvre dans le bloc 80 sur la valeur $\bar{R}$ est négatif, la même vérification d'allocation est alors mise en oeuvre.

L'interpolation du bloc 78 consiste à calculer par interpolation une valeur de quantité pilote optimale lorsque l'accès au bloc 78 est réalisé depuis le bloc 74 ou le bloc 82. En effet dans ces deux cas, cela signifie que l'on a parcouru l'intervalle des valeurs admissibles de $q_{pil}$ avec un pas trop important, ce qui à fait dépasser (à la hausse ou à la baisse) la valeur optimale sans l'avoir atteinte. Si l'accès au bloc 78 est réalisé depuis le bloc 80, cela signifie que l'on a déterminé une valeur de quantité pilote qui permet d'obtenir un ratio des maxima de gradient de pression proche de un. Dans ce cas, un test est mis en oeuvre pour savoir si les valeurs $\bar{P}_1$, $\bar{P}_2$ vérifient la relation (4) du problème d'optimisation, c'est-à-dire si $f(\bar{P}_1, \bar{P}_2) < 0$. Si le résultat de ce test est positif alors les valeurs maximales de gradient de pression sont acceptables pour le fonctionnement du moteur. Dans le cas contraire, cela signifie un mauvais fonctionnement du moteur ce qui permet donc éventuellement de commuter sur un mode de fonctionnement dégradé du moteur.

Les valeurs R_bas et R_haut sont déterminées pour tenir compte du compromis bruit/émission/robustesse comme cela est connu du domaine du réglage du bruit de combustion du moteur Ces deux valeurs encadrent la valeur *k* de consigne de compromis bruit/émission fixée lors de la calibration. Leur distance à cette valeur consigne est fonction de la dispersion coup à coup du ratio et de la robustesse des émissions et du niveau de bruit à une faible variation autour de cette consigne.

La valeur N du seuil pour le compteur de cycle peut être par exemple choisie égale à 10, ce qui est suffisant pour filtrer de manière satisfaisante le bruit et les variations instantanées des caractéristiques de la combustion dans le cylindre dont on cherche à déterminer la quantité pilote.

L'avantage des drapeaux $q_{pil}^{+}$ et $q_{pil}^{-}$ est d'éviter les oscillations de l'algorithme et de fournir un test de décision d'arrêt de la recherche quand aucune quantité pilote satisfaisante n'a pu être déterminée.

Il est à noter que cet algorithme permet de calculer une quantité pilote telle que $|q_{pil} - \bar{q}_{pil}| \leq \Delta q_{pil}$ , où $\bar{q}_{pil}$ est la quantité pilote optimale. La valeur de $\Delta q_{pil}$ est choisie pour satisfaire au compromis précision/temps de recherche comme cela est communément connu du domaine de l'optimisation.

Bien entendu d'autres algorithmes de recherche peuvent être utilisés, comme une recherche par dichotomie ou autres. Il est possible également d'utiliser un algorithme d'identification des paramètres du modèle thermodynamique selon la relation (3) comme un estimateur de Kalman, un estimateur par maximum de vraisemblance ou autres puis de calculer la quantité optimale pilote problème du problème d'optimisation correspondant.

Comme on peut le constater le nombre d'opérations mises en oeuvre par cet algorithme est réduit de sorte que le temps de calcul associé à celles-ci est négligeable au regard des puissances de calcul des calculateurs actuels.

On conçoit alors qu'il est possible de mettre en oeuvre une loi de commande de la quantité pilote injectée par cylindre de haute fréquence qui régule pour chaque cylindre et chaque point de fonctionnement, la quantité pilote autour de la quantité optimale. Ainsi, le bruit de fonctionnement du moteur est constamment sensiblement égal à sa valeur minimale et cela même si les caractéristiques mécaniques et/ou thermodynamiques du moteur varient rapidement au cours du temps.

Ainsi par exemple, l'unité 16 de commande peut surveiller en continu la valeur du ratio des gradients de pression et fournir cette valeur à l'unité 26 de supervision. Cette unité 26 de supervision met alors en oeuvre une stratégie de commande qui peut par exemple consister à lancer une nouvelle recherche de quantité pilote injectée dans les cylindres dès que la valeur du ratio des gradients n'est pas comprise dans un intervalle prédéterminé de valeurs admissibles.

L'unité 26 de supervision peut également être adaptée pour déclencher un recalage dès qu'un intervalle de temps s'est écoulé depuis le dernier recalage, ou dès qu'un nombre prédéterminé de kilomètres a été parcouru depuis le dernier recalage.

Comme on peut le constater, aucun modèle mathématique du moteur ou d'une oreille humaine n'a été utilisé pour déterminer la quantité pilote optimale. Le système selon l'invention permet donc de calculer cette quantité avec robustesse vis à vis des caractéristiques mécaniques et/ ou thermodynamiques des moteurs. Ce système permet également simplement un diagnostic de l'état du moteur. Comme on l'a déjà noté la quantité de calcul est peu élevée ce qui permet à l'ensemble des calculs d'être effectué par un calculateur de faible capacité, ou qui permet à l'ensemble des moyens d'être mis en oeuvre sur un circuit câblé spécialement conçu à cet effet.

Bien entendu d'autres modes de réalisation sont possibles, comme par exemple une détermination de quantité pilote par des moyens analogiques, et de multiples variations peuvent être envisagées par l'homme du métier sans sortir du cadre de la présente invention.

**Revendications**

**1.** Système de contrôle du bruit de combustion d'un moteur Diesel (10) de véhicule automobile, du type comportant des moyens (12) d'alimentation en carburant du moteur par injections multiples de carburant dans chaque cylindre de celui-ci, adaptés pour déclencher une alimentation en carburant de chaque cylindre selon au moins une injection pilote et une injection principale de carburant, **caractérisé en ce qu'**il comprend :

- des moyens (28, 30, 32) de détermination des gradients de pression dans le cylindre du moteur lors de son fonctionnement au moins lors des phases à injection pilote et principale ;
- des moyens (34) de détermination de la quantité de carburant injectée dans le cylindre lors de l'injection pilote pour une quantité prédéterminée de carburant injectée lors de l'injection principale, afin d'optimiser un critère de fonctionnement du cylindre basé sur le rapport entre les gradients de pression correspondants aux phases à injection pilote et principale, et donc d'optimiser le bruit de fonctionnement du moteur.

**2.** Système selon la revendication 1, **caractérisé en ce que** les moyens (34) de détermination de la quantité de carburant injectée dans le cylindre lors de l'injection pilote sont adaptés pour déterminer, par la mise en ceuvre d'un algorithme d'optimisation, une quantité de carburant injectée par cylindre lors de l'injection pilote selon les relations :

$$\min_{q_{pil} \in Q_{pil}} \left| \frac{\max\left(\dfrac{\partial P}{\partial \alpha_{pil}}\right)}{\max\left(\dfrac{\partial P}{\partial \alpha_{pri}}\right)} - k \right|$$

$$f\left( \max\left(\frac{\partial P}{\partial \alpha_{pil}}\right), \max\left(\frac{\partial P}{\partial \alpha_{pri}}\right) \right) < 0$$

où $q_{pil}$ est la quantité de carburant injectée dans un cylindre lors de l'injection pilote, $Q_{pil}$ est un ensemble prédéterminé de valeurs admissibles de $q_{pil}$, $\alpha$ est l'angle vilebrequin du cylindre, $\dfrac{\partial P}{\partial \alpha_{pil}}$ est le gradient de pression dans le cylindre lors de la phase à injection pilote du cycle du cylindre, $\dfrac{\partial P}{\partial \alpha_{pri}}$ est le gradient de pression dans le cylindre lors de la phase à injection principale du cycle du cylindre, k est une valeur de consigne fixée lors de la calibration et $f\left(\max\left(\dfrac{\partial P}{\partial \alpha_{pil}}\right), \max\left(\dfrac{\partial P}{\partial \alpha_{pri}}\right)\right) < 0$ est une fonction caractéristique d'une zone pré-déterminée d'allocation de valeurs admissibles pour le couple de valeurs $\left(\max\left(\dfrac{\partial P}{\partial \alpha_{pil}}\right), \max\left(\dfrac{\partial P}{\partial \alpha_{pri}}\right)\right)$.

3. Système selon la revendication 2, **caractérisé en ce que** les moyens (34) de détermination de la quantité de carburant injectée dans le cylindre lors de l'injection pilote sont adaptés pour mettre en oeuvre un algorithme d'optimisation qui comprend:

   - une étape (66) d'acquisition d'au moins un signal de gradient de pression représentatif de l'évolution du gradient de pression lors d'un cycle du cylindre, pour une quantité constante de carburant injectée lors de la phase pilote;

   - une étape (70) de calcul d'une valeur R représentative du ratio $\dfrac{\max\left(\dfrac{\partial P}{\partial \alpha_{pil}}\right)}{\max\left(\dfrac{\partial P}{\partial \alpha_{pri}}\right)}$ pour le cylindre et la quantité constante de carburant injectée considérés en fonction du au moins un signal de gradient de pression acquis ; et
   - une étape (72, 74, 76, 80, 82, 84) de détermination d'une variation de la quantité de carburant injectée dans le cylindre lors de la phase pilote en fonction de la valeur $\overline{R}$ calculée, selon une loi de parcours prédéterminée de l'ensemble prédéterminé de valeurs admissibles de quantité de carburant injectée lors de l'injection pilote.

4. Système selon la revendication 3, **caractérisé en ce que** la loi de parcours de l'ensemble prédéterminé de valeurs admissibles de quantité de carburant injectée lors de l'injection pilote, est déterminée par les caractéristiques d'un modèle thermodynamique selon la relation :

$$\max\left(\dfrac{\partial P}{\partial \alpha_{pri}}\right) = h\left(\max\left(\dfrac{\partial P}{\partial \alpha_{pil}}\right)\right)$$

où h est le modèle thermodynamique représentatif de l'évolution de la valeur du maximum du gradient de pression dans un cylindre lors de la phase à injection principale en fonction des valeurs du maximum du gradient de pression dans un cylindre lors de la phase à injection pilote.

5. Système selon l'une quelconque des revendications précédentes, **caractérisé en ce qu'**il comprend un capteur (28) de pression associé à chaque cylindre raccordé aux moyens (32) de détermination des gradients de pression.

6. Système selon l'une quelconque des revendications précédentes, **caractérisé en ce qu'**il comprend des moyens (30) d'acquisition de l'angle de l'arbre moteur raccordé aux moyens (32) de détermination des gradients de pression.

7. Système selon les revendications 5 et 6 , **caractérisé en ce** les moyens (32) de détermination des gradients de pression comprennent :

   - des moyens (50) de sélection de signal pour sélectionner un signal de pression d'un cylindre sélectionné parmi la pluralité des signaux de pression des cylindres;
   - des moyens (54) de fenêtrage d'acquisition pour acquérir le signal de pression du cylindre sélectionné délivré par le capteur (28) de pression associé lorsque l'angle vilebrequin du cylindre est compris dans une plage d'angle vilebrequin d'acquisition prédéterminée représentative de la phase à injection pilote et de la phase à injection principale du cycle du cylindre;
- un convertisseur (55) analogique/numérique pour échantillonner le signal de pression en sortie des moyens (54) de fenêtrage selon une loi d'échantillonnage prédéterminée ; et
- un filtre numérique (56) adapté pour déterminer une dérivée numérique du signal de pression échantillonné et ainsi obtenir le signal de gradient de pression de cylindre.

8. Système selon la revendication 7, **caractérisé en ce que** le filtre numérique (56) de dérivation est un filtre numérique à réponse impulsionnelle finie.

9. Système selon l'une des revendications 7 ou 8, **caractérisé en ce que** les moyens (34) de détermination de la quantité de carburant injectée dans le cylindre comprennent des moyens (36) de calcul adaptés pour calculer et stocker, à chaque cycle du cylindre, la valeur $\max\left(\dfrac{\partial P}{\partial \alpha_{pil}}\right)$ comme étant la valeur du signal de gradient de pression maximale dans la plage d'angle vilebrequin entre le début de la plage d'angle vilebrequin d'acquisition et l'angle d'avance de l'injection principale, la valeur $\max\left(\dfrac{\partial P}{\partial \alpha_{pri}}\right)$ comme étant la valeur maximale du signal de gradient de pression dans la plage d'angle vilebrequin entre cet angle d'avance d'injection principale et la fin de la plage d'angle vilebrequin d'acquisition et la valeur du ratio $R = \dfrac{\max\left(\dfrac{\partial P}{\partial \alpha_{pil}}\right)}{\max\left(\dfrac{\partial P}{\partial \alpha_{pri}}\right)}$ .

10. Système selon l'une des revendications 2 à 9, **caractérisé en ce que** la fonction caractéristique de la zone prédéterminés d'allocation est déterminés en fonction d'une note de bruit de fonctionnement du moteur dépendant des gradients de pression correspondant aux phases à injections pilote et principale selon la relation :

$$ \text{Note} = \lambda + \beta \times \max\left( \max\left(\frac{\partial P}{\partial \alpha_{pil}}\right), \max\left(\frac{\partial P}{\partial \alpha_{pri}}\right) \right) $$

où $\lambda$ et $\beta$ sont des paramètres déterminés expérimentalement.

11. Système selon l'une quelconque des revendications précédentes, **caractérisé en ce que** les moyens de détermination de la quantité de carburant injectée dans le cylindre lors de l'injection pilote sont adaptés pour déterminer séquentiellement la quantité de carburant injectée dans chaque cylindre indépendamment les uns des autres.

12. Système selon l'une quelconque des revendications précédentes, **caractérisé en ce qu'**il comprend des moyens (14, 22, 34) de commande adaptés pour commander les moyens (12) d'alimentation pour calculer la quantité de carburant injectée lors de l'injection pilote dans le cylindre de manière à réguler dans le cylindre la valeur du ratio

$\dfrac{\max\left(\dfrac{\partial P}{\partial \alpha_{pil}}\right)}{\max\left(\dfrac{\partial P}{\partial \alpha_{pri}}\right)}$ autour d'une consigne *k* afin de minimiser le bruit de fonctionnement du moteur.

**Claims**

1.  System for controlling the combustion noise of a diesel engine (10) of a motor vehicle, comprising means (12) for supplying the engine with fuel by multiple fuel injections into each cylinder thereof fitted to release a supply of fuel for each cylinder using at least one control injection and one main injection of fuel, **characterised in that** it comprises:

    • means (28, 30, 32) for determining pressure gradients in the cylinder of the engine during its operation at least during the control and main injection phases;
    • means (34) for determining the quantity of fuel injected into the cylinder during the control injection for a predetermined quantity of fuel injected during the main injection in order to optimise an operating criterion of the cylinder based on the ratio between the pressure gradients corresponding to the control and main injection phases, and thus optimise the engine running noise.

2.  System according to claim 1, **characterised in that** by implementing an optimisation algorithm, the means (34) for determining the quantity of fuel injected into the cylinder during the control injection are fitted to determine a quantity of cylinder-injected fuel during the control injection according to the following equations:

$$\min_{q_{pil} \varepsilon Q_{pil}} \left| \frac{max\left(\frac{\partial P}{\partial \alpha_{pil}}\right)}{max\left(\frac{\partial P}{\partial \alpha_{pri}}\right)} - k \right|$$

$$f\left(max\left(\frac{\partial P}{\partial \alpha_{pil}}\right), max\left(\frac{\partial P}{\partial \alpha_{pri}}\right)\right) < 0$$

where $q_{pil}$ is the quantity of fuel injected into a cylinder during the control injection, $Q_{pil}$ is a predetermined set of admissible values of $q_{pil}$, a is the crank angle of the cylinder, $\frac{\partial P}{\partial \alpha_{pil}}$ is the pressure gradient in the cylinder during the control injection phase of the cylinder cycle, $\frac{\partial P}{\partial \alpha_{pri}}$ is the pressure gradient in the cylinder during the main injection phase of the cylinder cycle, k is a fixed control variable during calibration and $f\left(max\left(\frac{\partial P}{\partial \alpha_{pil}}\right), max\left(\frac{\partial P}{\partial \alpha_{pri}}\right)\right) < 0$ is a characteristic function of a predetermined zone of allocation of admissible values for the pair of values $\left(max\left(\frac{\partial P}{\partial \alpha_{pil}}\right), max\left(\frac{\partial P}{\partial \alpha_{pri}}\right)\right)$.

3.  System according to claim 2, **characterised in that** the means (34) for determining the quantity of fuel injected into the cylinder during the control injection are fitted to implement an optimisation algorithm which comprises:

    o an acquisition step (66) for at least one pressure gradient signal representing the development of the pressure gradient during a cylinder cycle for a constant quantity of fuel injected during the control phase; o a calculation step (70) for a value $\overline{R}$ representing the ratio $\frac{max\left(\frac{\partial P}{\partial \alpha_{pil}}\right)}{max\left(\frac{\partial P}{\partial \alpha_{pri}}\right)}$ for the cylinder and the constant quantity of fuel injected considered as a function of at least one acquired pressure gradient signal; and
    o a step (72, 74, 76, 80, 82, 84) for determining a variation in the quantity of fuel injected into the cylinder during the control phase as a function of the $\overline{R}$ value calculated according to a predetermined law of passage of the predetermined set of admissible values of the quantity of fuel injected during the control injection.

4. System according to claim 3, **characterised in that** the law of passage of the predetermined set of admissible values of the quantity of fuel injected during the control injection is determined by the characteristics of a thermodynamic model according to the equation:

$$max\left(\frac{\partial P}{\partial \alpha_{prl}}\right) = h\left(max\left(\frac{\partial P}{\partial \alpha_{pll}}\right)\right)$$

where h is the thermodynamic model representing the development of the maximum pressure gradient value in a cylinder during the main injection phase as a function of the maximum pressure gradient values in a cylinder during the control injection phase.

5. System according to any one of the preceding claims, **characterised in that** it comprises a pressure sensor (28) associated with each cylinder connected to the means (32) for determining the pressure gradients.

6. System according to any one of the preceding claims, **characterised in that** it comprises means (30) for acquiring the angle of the engine shaft connected to the means (32) for determining the pressure gradients.

7. System according to claims 5 and 6, **characterised in that** the means (32) for determining the pressure gradients comprise:

• signal selection means (50) for selecting a pressure signal of a cylinder selected from the plurality of pressure signals of the cylinders;
• means (54) for providing acquisition windows to acquire the pressure signal of the selected cylinder supplied by the associated pressure sensor (28) when the crank angle is within a predetermined acquired crank angle range representing the control injection phase and the main injection phase of the cylinder cycle;
• an analog/digital converter (55) to sample the pressure signal output from the window means (54) according to a predetermined sampling law; and
• a digital filter (56) fitted to determine a digital derivative of the sampled pressure signal and thus to obtain the pressure gradient signal of the cylinder.

8. System according to claim 7, **characterised in that** the digital derivation filter (56) is a digital finished impulse response filter.

9. System according to one of claims 7 or 8, **characterised in that** the means (34) for determining the quantity of fuel injected into the cylinder comprise calculation means (36) fitted to calculate and store upon each cylinder cycle the

value $max\left(\dfrac{\partial P}{\partial \alpha_{pll}}\right)$ as the value of the maximum pressure gradient signal in the crank angle range of between the start of the acquired crank angle range and the lead angle of the main injection, the value $max\left(\dfrac{\partial P}{\partial \alpha_{prl}}\right)$ as the

maximum value of the pressure gradient signal in the crank angle range between this lead angle of injection and the end of the acquired crank angle range and the value of the ratio $R = \dfrac{max\left(\frac{\partial P}{\partial \alpha_{pll}}\right)}{max\left(\frac{\partial P}{\partial \alpha_{prl}}\right)}$.

10. System according to one of claims 2 to 9, **characterised in that** the characteristic function of the predetermined allocation zone is predetermined as a function of a note for the engine running noise dependent on pressure gradients corresponding to the control and main injection phases according to the equation:

$$\text{note} = \lambda + \beta \times \left( max\left(\frac{\partial P}{\partial \alpha_{pll}}\right), max\left(\frac{\partial P}{\partial \alpha_{prl}}\right) \right)$$

where $\lambda$ and $\beta$ are parameters determined by testing.

11. System according to any one of the preceding claims, **characterised in that** the means for determining the quantity of fuel injected into the cylinder during the control injection are fitted to sequentially determine the quantity of fuel injected into each cylinder independently of one another.

12. System according to any one of the preceding claims, **characterised in that** it comprises control means (14, 22, 34) fitted to control the supply means (12) to calculate the quantity of fuel injected during the control injection into the cylinder in order to regulate in the cylinder the value of the ratio $\dfrac{max\left(\frac{\partial P}{\partial \alpha_{pll}}\right)}{max\left(\frac{\partial P}{\partial \alpha_{prl}}\right)}$ around a control k in order to minimise the engine running noise.

**Patentansprüche**

1. System zum Steuern des Verbrennungsgeräusches eines Kraftfahrzeug-Dieselmotors (10) des Typs, der Mittel (12) für die Kraftstoffversorgung des Motors durch Mehrfachkraftstoffeinspritzungen in jeden seiner Zylinder umfasst, die dazu ausgelegt sind, eine Kraftstoffversorgung jedes Zylinders zumindest gemäß einer Voreinspritzung und einer Haupteinspritzung von Kraftstoff auszulösen, **dadurch gekennzeichnet, dass** es umfasst:

- Mittel (28, 30, 32) zum Bestimmen der Druckgradienten in dem Zylinder des Motors während seines Betriebs wenigstens während der Voreinspritzungs- und der Haupteinspritzungsphase;
- Mittel (34) zum Bestimmen der während der Voreinspritzung in den Zylinder eingespritzten Kraftstoffmenge für eine vorgegebene Menge eingespritzten Kraftstoffs während der Haupteinspritzung, um ein Betriebskriterium des Zylinders anhand des Verhältnisses zwischen den entsprechenden Druckgradienten in der Voreinspritzungsphase und in der Haupteinspritzungsphase zu optimieren und um **dadurch** das Betriebsgeräusch des Motors zu optimieren.

2. System nach Anspruch 1, **dadurch gekennzeichnet, dass** die Mittel (34) zum Bestimmen der während der Voreinspritzung in den Zylinder eingespritzten Kraftstoffmenge dazu ausgelegt sind, durch Ausführen eines Optimierungsalgorithmus eine pro Zylinder eingespritzte Kraftstoffmenge während der Voreinspritzung gemäß den folgenden Beziehungen zu bestimmen:

$$\min_{q_{pil} \in Q_{pil}} \left| \frac{max\left(\dfrac{\partial P}{\partial \alpha_{pil}}\right)}{max\left(\dfrac{\partial P}{\partial \alpha_{pri}}\right)} - k \right|$$

$$f\left( max\left(\frac{\partial P}{\partial \alpha_{pil}}\right), max\left(\frac{\partial P}{\partial \alpha_{pri}}\right) \right) < 0$$

wobei $q_{pil}$ die während der Voreinspritzung in einen Zylinder eingespritzte Kraftstoffmenge ist, $Q_{pil}$ eine vorgegebene Gesamtheit annehmbarer Werte für $q_{pil}$ ist, $\alpha$ der Kurbelwinkel des Zylinders ist, $\dfrac{\partial P}{\partial \alpha_{pil}}$ der Druckgradient in dem Zylinder während der Voreinspritzphase des Zylindertakts ist, $\dfrac{\partial P}{\partial \alpha_{pri}}$ der Druckgradient in dem Zylinder während der Haupteinspritzphase des Zylindertakts ist, k ein fester Sollwert während der Kalibrierung ist und

$$f\left( max\left( \frac{\partial P}{\partial \alpha_{pil}} \right), max\left( \frac{\partial P}{\partial \alpha_{pri}} \right) \right) < 0$$ eine charakteristische Funktion einer vorgegebenen Zuweisungszone von annehmbaren Werten für das Wertepaar $\left( max\left( \dfrac{\partial P}{\partial \alpha_{pil}} \right), max\left( \dfrac{\partial P}{\partial \alpha_{pri}} \right) \right)$ ist.

3. System nach Anspruch 2, **dadurch gekennzeichnet, dass** die Mittel (34) zum Bestimmen der während der Voreinspritzung in den Zylinder eingespritzten Kraftstoffmenge dazu ausgelegt sind, einen Optimierungsalgorithmus auszuführen, der umfasst:

   - einen Schritt (66) zum Erfassen wenigstens eines Druckgradientensignals, der die Entwicklung des Druckgradienten während eines Zylindertakts repräsentiert, für eine während der Vorphase eingespritzte konstante Kraftstoffmenge;

   - einen Schritt (70) zum Berechnen eines Wertes $\overline{R}$, der das Verhältnis $\dfrac{max\left( \dfrac{\partial P}{\partial \alpha_{pil}} \right)}{max\left( \dfrac{\partial P}{\partial \alpha_{pri}} \right)}$ für den Zylinder und die eingespritzte konstante Kraftstoffmenge repräsentiert, die als Funktion des wenigstens einen erfassten Druckgradientensignals betrachtet werden; und
   - einen Schritt (72, 74, 76, 80, 82, 84) zum Bestimmen einer Veränderung der während der Vorphase in den Zylinder eingespritzten Kraftstoffmenge als Funktion des berechneten Wertes $\overline{R}$ gemäß einem vorgegebenen Gesetz des Durchlaufens der vorgegebenen Gesamtheit annehmbarer Werte der während der Voreinspritzung eingespritzten Kraftstoffmenge.

4. System nach Anspruch 3, **dadurch gekennzeichnet, dass** das Gesetz des Durchlaufens der vorgegebenen Gesamtheit annehmbarer Werte der während der Voreinspritzung eingespritzten Kraftstoffmenge durch die Charakteristiken eines thermodynamischen Modells gemäß der folgenden Beziehung bestimmt wird:

$$max\left( \frac{\partial P}{\partial \alpha_{pri}} \right) = h\left( max\left( \frac{\partial P}{\partial \alpha_{pil}} \right) \right)$$

wobei $h$ das thermodynamische Modell ist, das die Entwicklung des Maximalwerts des Druckgradienten in einem Zylinder während der Haupteinspritzphase als Funktion der Maximalwerte des Druckgradienten in einem Zylinder während der Voreinspritzphase repräsentiert.

5. System nach einem der vorhergehenden Ansprüche, **dadurch gekennzeichnet, dass** es einen Drucksensor (28) umfasst, der jedem Zylinder zugeordnet ist und mit den Mitteln (32) zum Bestimmen der Druckgradienten verbunden ist.

**6.** System nach einem der vorhergehenden Ansprüche, **dadurch gekennzeichnet, dass** es Mittel (30) zum Erfassen des Motorwellenwinkels umfasst, die mit den Mitteln (32) zum Bestimmen der Druckgradienten verbunden sind.

**7.** System nach den Ansprüchen 5 und 6, **dadurch gekennzeichnet, dass** die Mittel (32) zum Bestimmen der Druckgradienten umfassen:

- Mittel (50) zur Signalauswahl, um ein Drucksignal eines ausgewählten Zylinders unter den mehreren Drucksignalen der Zylinder auszuwählen;
- Mittel (54) zur Erfassungsfensterbildung, um das Drucksignal des ausgewählten Zylinders, das von dem zugeordneten Drucksensor (28) geliefert wird, zu erfassen, wenn der Kurbelwinkel des Zylinders in einem vorgegebenen Erfassungskurbelwinkelbereich liegt, der die Voreinspritzphase und die Haupteinspritzphase des Zylindertakts repräsentiert;
- einen Analog/Digital-Umsetzer (55) zum Abtasten des Drucksignals am Ausgang der Fensterbildungsmittel (54) gemäß einem vorgegebenen Abtastgesetz; und
- ein digitales Filter (56), das dazu ausgelegt ist, eine digitale Ableitung des abgetasteten Drucksignals zu bestimmen und somit das Druckgradientensignal des Zylinders zu erhalten.

**8.** System nach Anspruch 7, **dadurch gekennzeichnet, dass** das digitale Ableitungsfilter (56) ein digitales Filter mit endlicher Impulsantwort ist.

**9.** System nach einem der Ansprüche 7 oder 8, **dadurch gekennzeichnet, dass** die Mittel (34) zum Bestimmen der in den Zylinder eingespritzten Kraftstoffmenge Rechenmittel (36) umfassen, die dazu ausgelegt sind, in jedem Zyklus des Zylinders den Wert $\dfrac{\partial P}{\partial \alpha_{pil}}$ als den Maximalwert des Druckgradientensignals in dem Kurbelwinkelbereich zwischen dem Beginn des Erfassungskurbelwinkelbereichs und dem Voreilungswinkel der Haupteinspritzung, den Wert $\dfrac{\partial P}{\partial \alpha_{pri}}$ als den Maximalwert des Druckgradientensignals in dem Kurbelwinkelbereich zwischen diesem Haupteinspritzungs-Voreilungswinkel und dem Ende des Erfassungskurbelwinkelbereichs und den Wert des Verhältnisses $\dfrac{max\left(\dfrac{\partial P}{\partial \alpha_{pil}}\right)}{max\left(\dfrac{\partial P}{\partial \alpha_{pri}}\right)}$ zu berechnen und zu speichern.

**10.** System nach einem der Ansprüche 2 bis 9, **dadurch gekennzeichnet**, das die charakteristische Funktion der vorgegebenen Zuweisungszone als Funktion eines Kennzeichens des Betriebsgeräusches des Motors bestimmt wird, die von dem Druckgradienten, die der Voreinspritzungsphase und der Haupteinspritzungsphase entsprechen, gemäß der folgenden Beziehung abhängt:

$$\text{Kennzeichen} = \lambda + \beta \times max\left(max\left(\frac{\partial P}{\partial \alpha_{pil}}\right), max\left(\frac{\partial P}{\partial \alpha_{pri}}\right)\right)$$

wobei $\lambda$ und $\beta$ experimentell bestimmte Parameter sind.

**11.** System nach einem der vorhergehenden Ansprüche, **dadurch gekennzeichnet, dass** die Mittel zum Bestimmen der während der Voreinspritzung in den Zylinder eingespritzten Kraftstoffmenge dazu ausgelegt sind, nacheinander die in jeden Zylinder eingespritzte Kraftstoffmenge unabhängig voneinander zu bestimmen.

**12.** System nach einem der vorhergehenden Ansprüche, **dadurch gekennzeichnet, dass** es Steuermittel (14, 22, 34) umfasst, die dazu ausgelegt sind, die Versorgungsmittel (12) zu steuern, um die während der Voreinspritzung in den Zylinder eingespritzten Kraftstoffmenge in der Weise zu berechnen, dass im Zylinder der Wert des Verhältnisses

$$\frac{max\left(\dfrac{\partial P}{\partial \alpha_{pil}}\right)}{max\left(\dfrac{\partial P}{\partial \alpha_{pri}}\right)}$$

um einen Sollwert k reguliert wird, um das Betriebsgeräusch des Motors minimal zu machen.

FIG.1A

FIG.1B

FIG.2

EP 1 496 237 B1

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0959237 B1
- EP 1316704 A
- EP 1316709 A
- EP 1209458 A